# EUROPEAN PATENT APPLICATION

(11) **EP 1 445 753 A2**
(43) Date of publication of application: **11.08.2004**
(21) Application number: 04075340.2
(22) Date of filing: 03.02.2004
(51) Int. Cl.: G09G 1/16

(54) **Apparatus and method for processing displayed data**

(30) Priority: 04.02.2003 KR 2003006720
(71) Applicant: LG Electronics Inc., Seoul 150-875 (KR)
(72) Inventor: An, Byung, Hyun 101-1002 Jo ongsan m aeol, Goyang-si, Kyunggi-do (KR)
(74) Representative: Ekström, Nils

(57) **Abstract**

The present invention relates to an apparatus for processing displayed data and method thereof, through which although an image indicator (e.g., PCs) connected to a display device freezes or malfunctions, all unsaved data can be restored without damages. The apparatus for processing displayed data with a data restoration function according to the invention includes Micom for controlling the display, and outputting a selection signal in response to/without regard to a storage command signal received from outside and a vertical synchronizing signal in dependence of the operation of the computer; comparator for comparing the selection signal with the vertical synchronizing signal, each being outputted from the Micom, and outputting a storage related signal; and memory for saving an image signal corresponding to the output signal from the comparator. Therefore, when a PC malfunctions or freezes in the middle of working, the present invention can be advantageously used for minimizing data loss a user has been working on, simply by selecting a data restoration function of the display device to restore all unsaved data.

## Description

### BACKGROUND OF THE INVENTION

### 1. Field of the Invention

The present invention relates to an apparatus for processing displayed data and method thereof, through which although an image appliance (e.g., PCs) connected to a display device freezes or malfunctions, all unsaved data can be restored without damages.

### 2. Discussion of the Background Art

In general, display devices refer to TV monitors or PC monitors. CRT (Cathode Ray Tube) monitors or LCD monitors are typical examples thereof.

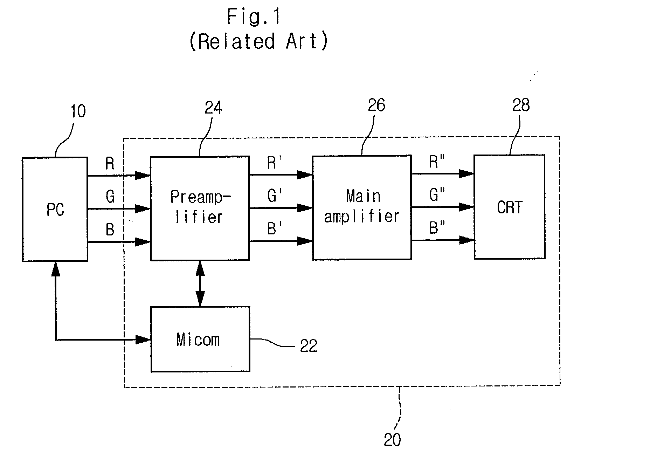

Fig. 1 is a schematic block diagram illustrating the structure of a related art CRT monitor connected to a PC.

Referring to Fig. 1, the CRT monitor 20 includes a microcomputer (Micom) 22, preamplifier 24, main amplifier 26, and CRT 28.

As illustrated in Fig. 1, input R, G, and B analog image signals from the PC 10 are amplified through the preamplifier 24 and the main amplifier 26, and transmitted to the CRT 28 for display.

The Micom 22 communicates with the PC through a DDC (Display Data Channel), and controls each component inside of the CRT monitor 20.

As for the related art CRT monitor 20 with the above described structure, after a user works on document or pictures, namely input image signals from the PC, displayed on the monitor screen, he or she must input a designated "save" command operating a keyboard or a mouse, in order to save the data file he or she has been working on.

In the past, when the PC freezes in the middle of working caused by software malfunction or corruption, resulting in data loss, the user could not restore unsaved data files. In that situation, the user could do nothing but accepting that a data loss have occurred, and will have to reboot the PC and start working again, hoping to remember the lost data he or she has been working on.

Therefore, data loss can be very costly, not only in monetary terms but also in downtime especially when the lost data is very important or the user is in a big hurry to prepare the data.

### SUMMARY OF THE INVENTION

An object of the invention is to solve at least the above problems and/or disadvantages and to provide at least the advantages described hereinafter.

Accordingly, one object of the present invention is to solve the foregoing problems by providing an apparatus for processing displayed data and method thereof, through which even if an image applience (e.g., PCs) connected to a display device freezes or malfunctions, all unsaved data can be restored without damages.

The foregoing and other objects and advantages are realized by providing a apparatus for processing displayed data includeing:
- a Micom arranged for controlling a display device and for outputting a selection signal and a vertical synchronizing signal in dependence of the operation of the computer;
- a comparator arranged for comparing the selection signal with the vertical synchronizing signal, each being outputted from the Micom, and outputting a storage related signal;
- a memory for saving an image signal corresponding to the output signal from the comparator; and
- an A/D converter arranged for converting an analog image signal outputted from a preamplifier of the display device to a digital image signal and for transmitting the converted digital image signal to the memory.
The selection signal can be generated in response to a storage command signal externally generated by a used from a control panel or alternatively can be automatically generated by the Micom in the event a malfunction of the computer has been detected.

Another aspect of the invention provides a method for processing displayed data, which includes the steps of: processing and displaying data; determining whether the computer is off or frozen; if the computer is off or frozen, inputting a storage command signal to the display device in order to save displayed data; saving in a memory a storage section of an image signal set for a signal corresponding to the storage command signal and to a synchronizing signal; and when restoring data saved in the memory, converting the data saved in the memory and displaying the converted data.

Therefore, when a PC malfunctions or freezes in the middle of working, the present invention can be advantageously used for minimizing data loss a user has been working on, simply by selecting a data restoration function of the display device to restore all unsaved data. In the past, when the PC malfunction results in data loss, the user had to reboot the PC and reproduce an image he or she has been previously working on, depending on his or her memory only. However, the present invention resolves this inconvenience.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a schematic block diagram illustrating a structure of a related art CRT (Cathode Ray Tube) monitor connected to a PC;

Fig. 2 is a schematic block diagram illustrating a structure of a CRT (Cathode Ray Tube) monitor having a data restoration function, in accordance with a first preferred embodiment of the present invention;

Fig. 3 shows outputs of a comparator for setting a storage section of image signals to be stored in a memory when a CRT (Cathode Ray Tube) monitor according to the first preferred embodiment of the invention performs restoration of lost data, and illustrates waveforms of the image signals;

Fig. 4 is a flow chart describing a procedure of storing image signals when a CRT (Cathode Ray Tube) monitor according to the first preferred embodiment of the invention performs restoration of lost data;

Fig. 5 is a flow chart describing a procedure of restoring and outputting stored image signals when a CRT (Cathode Ray Tube) monitor according to the first preferred embodiment of the invention performs restoration of lost data;

Fig. 6 is a flow chart describing a method for saving displayed data and recovering lost data; and

Fig. 7 is a schematic block diagram illustrating a structure of a LCD monitor having a data restoration function, in accordance with a second preferred embodiment of the present invention.

### DETAILED DESCRIPTION OF PREFERRED EMBODIMENTS

The following detailed description will present an apparatus for processing displayed data and method thereof according to a preferred embodiment of the invention in reference to the accompanying drawings.

The same reference numerals are used in different drawings when they indicate the same or similar components.

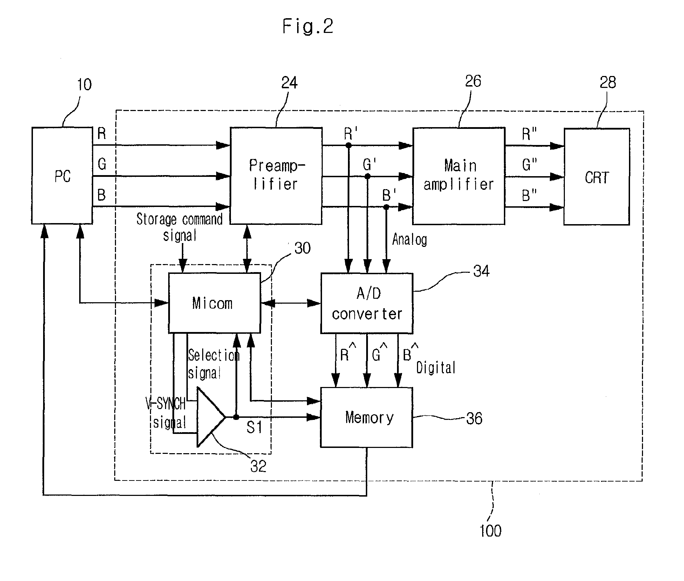

Fig. 2 is a schematic block diagram illustrating a structure of a CRT (Cathode Ray Tube) monitor having a data restoration function, in accordance with a first preferred embodiment of the present invention. A repetitive explanation of the components in Fig. 2 which are bearing the same reference numerals as components already described in relation to Fig. 1 will not be provided here.

Referring to Fig. 2, the CRT monitor 100 of the invention further includes a comparator 32, an A/D converter 34, and a memory 36 in addition to the Micom 30, preamplifier 24, main amplifier 26, and CRT 28 which are main components of the related art CRT monitor of Fig. 1.

The Micom 30 and the comparator 32 can be made as separate components, or the Micom 30 can function as a comparator as well.

Therefore, when the Micom 30 functions as a comparator, all functions of the comparator (these will be discussed later) are performed at the Micom.

When the PC 10 freezes all of sudden and a user did not save data he or she has been working on, the user inputs a storage command signal through a control panel (not shown) of the monitor. Then the Micom 30 controls the A/D converter 34 to convert input R'G'B' analog image signals from the preamplifier 24 to R^G^B^ digital image signals, and controls the memory 36 to save the digital image signals.

In an alternative embodiment to the above, when the PC 10 freezes all of sudden and the user did not save data he or she has been working on, without regard to whether the user inputs the storage command signal, the Micom 30 automatically generates a selection signal and a V-SYNCH (vertical synchronizing) signal, thereby saving image signals currently being worked on in the memory.

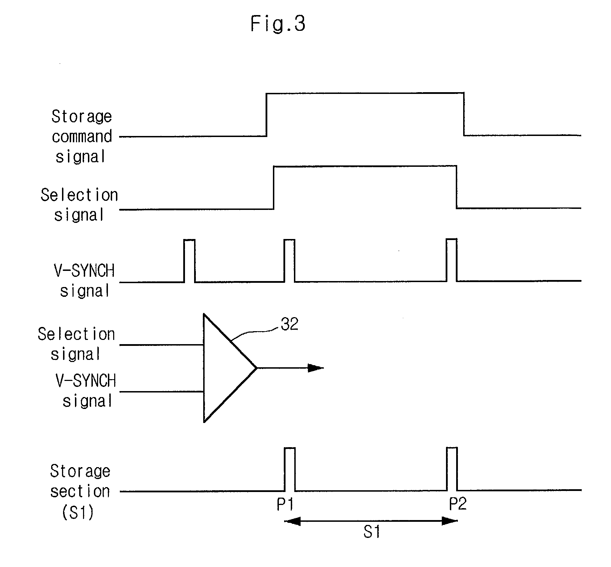

The Micom 30 controls each component inside of the CRT monitor 100. Especially when the user inputs the storage command signal, the Micom 30 responds to the command by outputting a selection signal illustrated in Fig. 3 to the comparator 32.

Here, the pulse period of the storage command signal is not shorter than the pulse period of the selection signal.

The comparator 32 compares the selection signal with a V-SYNCH signal from the Micom 30, and outputs the comparison result to the Micom 30 and to the memory 36. On the basis of the comparison result outputted from the comparator 32, the Micom 30 sets a storage section of image signals. More details on the method for setting the storage section of image signals will be provided with reference to Fig. 3.

The V-SYNCH signal outputted from the Micom is generated when an output H-SYNCH/V-SYNCH signal which is provided from the PC under normal operation is not input to the CRT monitor 100 functioning as a display device, or when a terminal output signal indicating a connection between the PC 10 and the CRT monitor 100 is lost.

Alternatively, a V-FBP (Vertical Fly Back Pulse) signal can be used instead of the V-SYNCH signal, and the same result can still be obtained. This is possible because the V-FBP signal is an amplified V-SYNCH signal through a vertical deflection circuit (not shown), in order to be used at a high voltage. Accordingly, the V-FBP signal and the V-SYNCH signal have the same pulse period.

Fig. 3 shows outputs of the comparator for setting the storage section of image signals to be stored in a memory when the CRT monitor according to the first preferred embodiment of the invention performs restoration of lost data, and depicts waveforms of the image signals.

Referring to Fig. 3, the comparator 32 receives the selection and V-SYNCH signals from the Micom 30, and compares these two signals with each other. When the logic level of each signal is high or low, the comparator 32 outputs a high level signal.

Description of the invention will be based on a case when the logic level of both input signals to the comparator 32 is high. However, as discussed before, when the logical level of the selection signal and of the V-SYNCH signal are low, currently displayed image signals can also be stored in the memory.

When a first high level signal is outputted from the comparator 32, the Micom 30 outputs a storage start signal (P1), indicating that saving of an image signal has started. When a second high level signal is outputted from the comparator 32, the Micom outputs a storage end signal (P2), indicating that saving of the image signal has ended.

After the storage end signal (P2) is outputted, the Micom 30 resets the logic level of the selection signal to a low level. Thus, an interval between the P1 signal and the P2 signal is determined as the storage section (S1) for the image signal to be saved in the memory 36

The determined storage section (S1) for the image signal equals to a section corresponding to one period of the V-SYNCH signal. More specifically, it is a section for an image signal that corresponds to one frame displayed on the entire monitor screen.

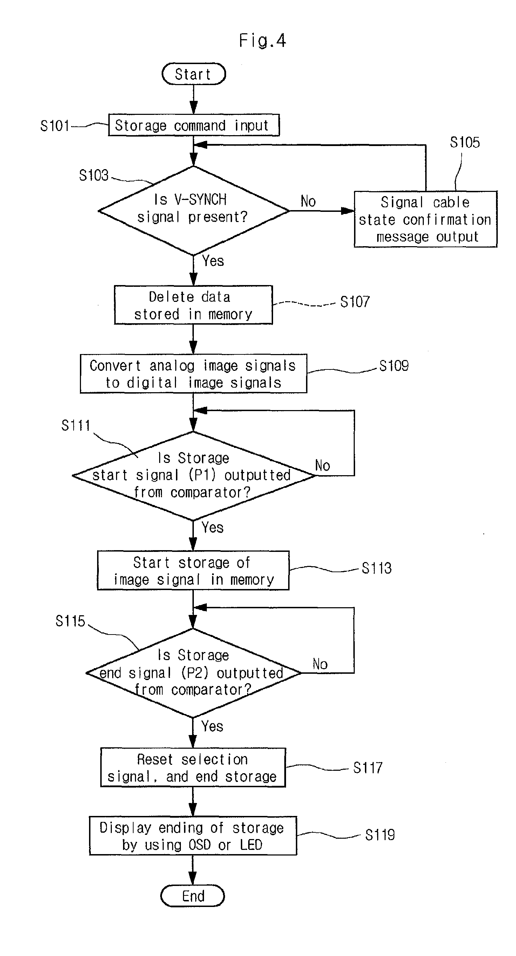

The operation principle of a data restoration function of the CRT monitor having the above described structure will be now explained below, referring to Figs. 4, 5, and 6.

Fig. 4 is a flow chart describing a procedure of storing image signals when the CRT monitor according to the first preferred embodiment of the invention performs restoration of lost data.

Referring to Fig. 4, when the PC freezes all of sudden before the user saves data he or she has been working on, the user inputs the storage command signal (S101).

The storage command signal is input through a control panel (not shown) of the monitor. Next, the Micom 30 determines whether the V-SYNCH signal is present (S103).

If the V-SYNCH signal is not present ("No" in step 103), an image signal is not going to be displayed on the monitor screen. In this situation, the Micom 30 outputs to the monitor screen a request message for checking a connection state of a signal cable connected to the PC (S105).

Alternatively, if the V-SYNCH signal is present ("Yes" in step 103), the Micom 30 deletes the data stored previously in the memory 36 to store new digital image(S107), but not all the time.

The A/D converter 34 receives R'G'B' analog image signals outputted from the preamplifier 24, and converts them to R^G^B^ digital image signals (S109). Then the Micom 30 confirms whether the storage start signal (P1) is outputted from the comparator 32 (S111).

The storage start signal (P1) is outputted at the first point of time when the logic levels of the selection signal and of the V-SYNCH signal being input to the comparator 32 are both high.

Therefore, when the storage start signal (P1) is outputted ("Yes" in step 111), storage of R^G^B^ digital image signals in the memory 36 is started (S113). Later, the Micom 30 confirms whether the storage end signal (P2) is outputted from the comparator 32 (S115).

Here, the storage end signal (P2) is outputted at the second point of time when the logic levels of the selection signal and of the V-SYNCH signal being input to the comparator 32 are both high.

When the storage end signal (P2) is outputted ("Yes" in step 115), the Micom 30 resets the selection signal, and ends the digital image signal saving (S117). Then, using a LED (not shown) equipped on the exterior of the monitor or taking advantage of an OSD (On Screen Display) function, the Micom indicates outside that data storage is ended (S119). In this manner, currently displayed image signals can be saved while the data restoration function of the monitor is being performed.

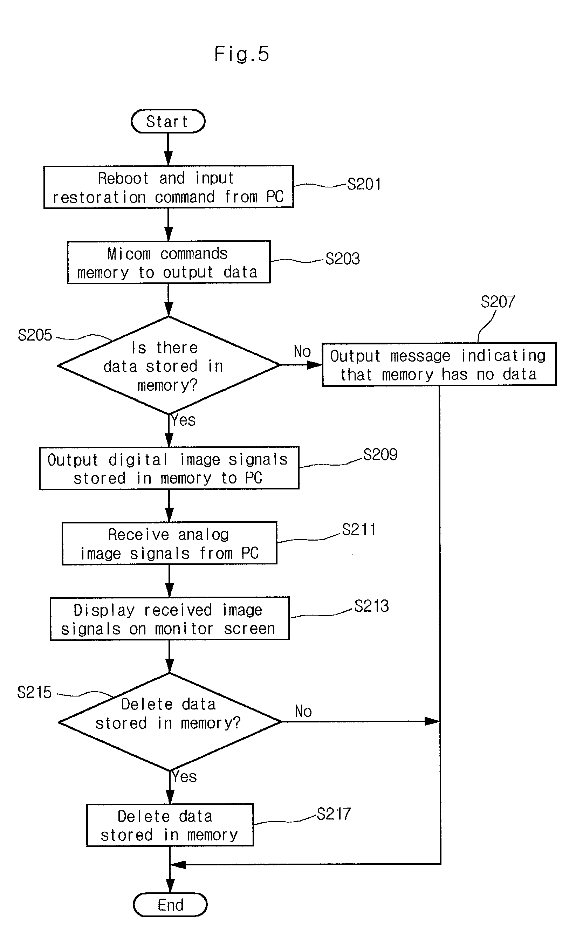

Fig. 5 is a flow chart describing a procedure of restoring and outputting stored image signals when the CRT monitor according to the first preferred embodiment of the invention performs restoration of lost data.

Referring to Fig. 5, when the PC 10 is rebooted and a restoration command signal for restoring digital image signals stored in the memory 36 of the CRT monitor 100 is input to the Micom 30 from the PC 10 (S201), the Micom transmits to the memory 36 a control signal for commanding output of the pre-stored image signal data (S203).

Afterwards, it is confirmed whether the pre-stored data exists in the memory 36 (S205). If the pre-stored data does not exist in the memory 36 ("No" in step 205), the Micom 30 outputs a message to the monitor screen, indicating that there is no data stored (S207) in the memory 36, and ends the procedure.

On the other hand, if the pre-stored data exists in the memory 36 ("Yes" in step 205), the Micom 30 transmits the data of the memory, namely digital image signals, to the PC 10 (S209). Generally, communication between the memory 36 and the PC 10 can be achieved through a DDC (Display Data Channel) or via a USB (Universal Serial Bus).

Next, the image signal is retransmitted from the PC 10 (S211). At this time, the image signal is an analog image signal adequate for outputting to the monitor, having been converted from the digital image signal transmitted to the PC 10 in step 209.

The Micom 30 receives the retransmitted image signal from the PC 10, and outputs the image signal to the monitor screen (S213). Then, the Micom 30 outputs to the monitor screen a message inquiring the user whether he or she wants to delete the data stored in the memory 36 (S215). If the user inputs a data delete command signal, indicating that he or she wants to delete the pre-stored data ("Yes" in step 215), the Micom 30 deletes all data stored in the memory 36 (S217). In this way, stored image signals can be restored and outputted while the data restoration function of the monitor is being performed.

However, when the user inputs a command signal, indicating that he or she does not want to delete the pre-stored data ("No" in step 215), the data in the memory 36 is not deleted and the procedure is ended.

The image signals stored in the memory can be outputted to the monitor screen through the A/D converter and the main amplifier.

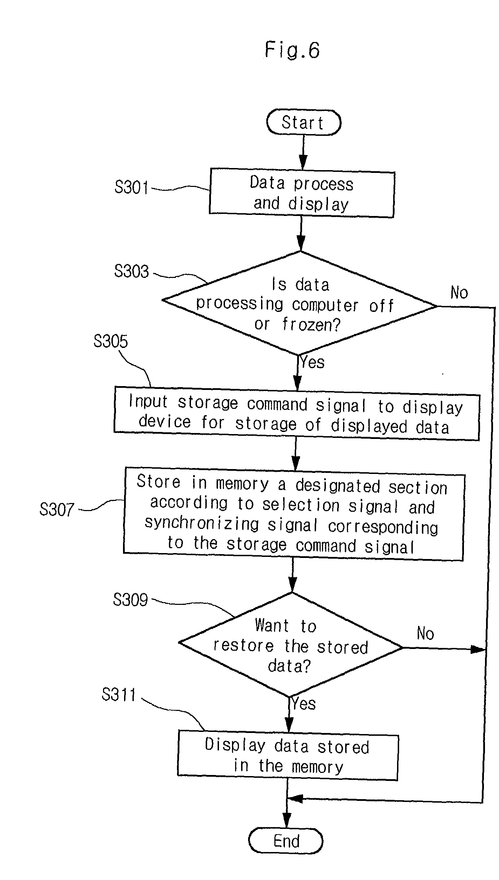

Fig. 6 is a flow chart describing a method for saving displayed data and recovering lost data.

Data is processed in the PC, and displayed on the display device (S301).

It is determined whether the PC is off or frozen when image signals are being displayed (S303).

If it turns out that the PC has malfunctioned, the user applies a storage command signal to the display device, to save the displayed data (S305).

A storage section of the image signal is created in dependence of a selection signal corresponding to the storage command signal or of a V-SYNCH signal, and saved in the memory (S307).

When the data saved in the memory needs to be restored, the data in the memory is retransmitted to the PC to be converted, or directly displayed without being retransmitted to the PC (S311).

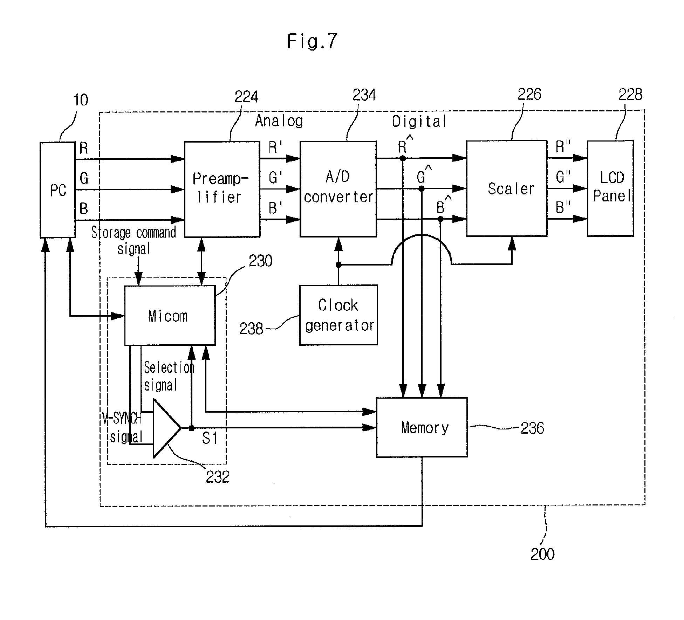

Fig. 7 is a schematic block diagram illustrating a structure of a LCD monitor having a data restoration function, in accordance with a second preferred embodiment of the present invention. A repetitive explanation of the components in Fig. 7, which has the same reference numerals and denote the same components as components already described in relation to Fig. 2 will not be provided here.

Referring to Fig. 7, the LCD monitor 200 of the invention further includes clock generator 238 and scaler 226, in addition to Micom 230, preamplifier 224, A/D converter 234, comparator 232, LCD panel 228, and memory 236 which are main components of a related art LCD monitor.

The Micom 230 and the comparator 232 can be made as a separate component, or the Micom 230 can function as a comparator as well.

Therefore, when the Micom 230 functions as a comparator, all functions of the comparator are performed at the Micom.

The scaler 226 receives R^G^B^ digital image signals outputted from the A/D converter 234, and converts the digital image signals to an adequate format for the LCD panel 228. The clock generator 238 provides a standard clock required for processing digital processing to the A/D converter 234 and scaler 226.

Moreover, the clock generator 238 is connected to the A/D converter and scaler. The clock generator performs signal synchronization in the A/D converter and tuning in the scaler.

Overall, the structure of the CRT monitor 100 (refer to Fig. 2) according to the first embodiment is similar to that of the LCD monitor 200 (refer to Fig. 7) according to the second embodiment, except that the LCD monitor 200 does not include a separate A/D converter because the A/D conversion is already included in the basic data process of the LCD monitor 200 and that the LCD monitor includes the scaler 226 instead of the main amplifier (refer to 26 of Fig. 2), thereby outputting adequate image signals for the LCD panel.

Therefore, the operation procedure for data restoration performed in the LCD monitor 200 of the second embodiment is similar to that of the CRT monitor 100 of the first embodiment explained with reference to Fig. 2 to Fig. 6. However, as discussed above, the LCD monitor 200 does not require the A/D converter for converting analog signals to digital signals because it is included in the basic data process.

Accordingly, the apparatus for processing displayed data and method thereof of the invention enables to restore all unsaved data without damages when the image applience (e.g., PCs) connected to the display device freezes or malfunctions all of sudden.

While the invention has been shown and described with reference to certain preferred embodiments thereof, it will be understood by those skilled in the art that various changes in form and details may be made therein without departing from the spirit and scope of the invention as defined by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An apparatus for processing displayed data in a system having a computer for processing data and a display device with an amplifier for amplifying input signals from the computer, the apparatus comprising:
a Micom for controlling the display device, and outputting a selection signal and a vertical synchronizing signal in dependence of the operation of the computer;
a comparator for comparing the selection signal with the vertical synchronizing signal, each being outputted from the Micom, and outputting a storage related signal; and
a memory for saving an image signal corresponding to the storage related signal generated as an output signal from the comparator.

2. An apparatus for processing displayed data in a system having a computer for processing data and a display with an amplifier for amplifying input signals from the computer, the apparatus comprising:
a Micom for controlling the display, outputting a selection signal and generating a synchronizing signal in dependence of the operation of the computer, and outputting a storage related signal in dependence of the comparison result; and
memory for saving an image signal corresponding to the storage related signal generated as an output signal from the comparator.

3. An apparatus according to claim 1, wherein the selection signal is generated in response to a storage command signal externally generated by a user.

4. An apparatus according to claim 1, wherein the selection signal is automatically generated by the Micom when malfunction of the computer is detected.

5. The apparatus according to claim 1, further comprising:
an A/D converter, under the control of the Micom, for converting an analog image signal outputted from a preamplifier of the display device to a digital image signal, and for transmitting the digital image signal to the memory.

6. The apparatus according to claim 1, wherein the image signal saved in the memory is a digital image signal outputted from the A/D converter, equipped in the display device, by controlling of the Micom.

7. The apparatus according to claim 1, wherein the Micom is arranged to display the image signal saved in the memory to the display device if a restoration command signal is input to the Micom,.

8. The apparatus according to claim 1, wherein the comparator is arranged to compare the selection signal with the vertical synchronizing signal, each being outputted from the Micom, and if logic levels of both signals are same, output a storage command signal.

9. The apparatus according to claim 1, wherein the Micom is arranged to output a vertical synchronizing signal when an horizontal/vertical synchronisation signal is not input to the display device when the PC is under normal operation, or when a terminal output signal indicates that a connection between the PC and the monitor is under open state.

10. The apparatus according to claim 8, wherein the comparator is arranged to compare the selection signal with a vertical fly back pulse signal.

11. The apparatus according to claim 8, wherein the comparator is arranged to output the storage related signal when the selection and vertical synchronizing signals outputted from the Micom are both high or low.

12. The apparatus according to claim 8, wherein the Micom is arranged to save the image signal in the memory in response to a first command signal outputted from the comparator, and end storage of the image signal in response to a second command signal outputted from the comparator.

13. The apparatus according to claim 12, wherein the Micom is arranged to save the image signal in the memory by outputting a storage start signal with respect to the image signal when the first command signal is input from the comparator, , and the Micom is arranged to end storage of the image signal by outputting a storage end signal when the second command signal is input from the comparator,.

14. The apparatus according to claim 13, wherein a storage section corresponds to a period of the vertical synchronizing signal, and is a section of an image signal corresponding to one frame displayed on a full monitor screen.

15. An apparatus for processing displayed data in a system having a computer for processing data and a display device with an amplifier for amplifying input signals from the computer, the apparatus comprising:
a Micom for controlling the display, and outputting a selection signal and a vertical synchronizing signal in dependence of the operation of the computer;
a comparator for comparing the selection signal with the synchronizing signal, each being outputted from the Micom, and outputting a storage related signal;
a memory for saving an image signal corresponding to the storage related signal generated as an output signal from the comparator;
an A/D converter, under the control of the Micom, for converting input analog image signals from the amplifier of the display device to digital image signals; and
a scaler for converting an input signals from the A/D converter to a displayable format.

16. The apparatus according to claim 15, further comprising:
a clock generator, connected to the A/D converter and scaler, for signal synchronization or tuning.

17. The apparatus according to claim 15, wherein the Micom and the comparator can be made as separate components, or the Micom performs the function of the a comparator.

18. A method for processing displayed data in a system having a computer for processing data and a display device with an amplifier for amplifying input signals from the computer and a controller, the method comprising the steps of:
processing and displaying data;
determining whether the computer is off or frozen;
if the computer is off or frozen, applying a storage command signal to the display device in order to save displayed data; and
saving in a memory a storage section of an image signal set for a signal generated by the storage command signal and a synchronizing signal.

19. The method according to claim 18, further comprising the step of:
when the data saved in the memory is restored, converting and displaying the data saved in the memory.

20. A method for processing displayed data in a system having a computer for processing data and a display device with an amplifier for amplifying input signals from the computer and a controller, the method comprising the steps of:
receiving a storage command signal; and
in response to a selection signal generated by the storage command signal and a vertical synchronizing signal, said storage command signal being dependent on an operational state of the computer, storing an image signal displayed on the display device in a memory.

21. The method according to claim 20, wherein the step of storing the displayed image signal in the memory comprises substeps of:
outputting the selection signal;
comparing the selection signal with the vertical synchronizing signal, and outputting a storage signal when the two signals are both high or low; and
in response to the outputted storage related signal, starting storage of the displayed image signal and/or ending storage of the displayed image signal.

22. A method for processing displayed data in a system having a computer for processing data and a display device with an amplifier for amplifying input signals from the computer and a controller, the method comprising the steps of:
receiving a storage command signal;
in response to a selection signal generated by the storage command signal and a vertical synchronizing signal in dependence of an operational state of the computer, storing an image signal displayed on the display device in a memory;
receiving a restoration command signal of data stored in the memory; and
reading an image signal stored in the memory, and displaying the image signal on the display device.

23. The method according to claim 22, wherein the step of reading the image signal stored in the memory and displaying the image signal on the display device comprises substeps of:
in response to the restoration command signal, transmitting the image signal stored in the memory to the computer, amplifier or scaler; and
displaying the transmitted image signal on a screen of the display device.

24. The method according to claim 23, wherein the step of transmitting the image signal stored in the memory to the computer comprises substeps of:
converting the received image signal;
receiving an image signal retransmitted from the computer; and
displaying the retransmitted image signal from the computer on the screen of the display device.

25. The method according to claim 24, further comprising the steps of:
in the computer, receiving the transmitted image signal and converting the image signal to an adequate image signal for transmitting to the display device; and
transmitting the converted image signal to the display device.
